# EUROPÄISCHE PATENTSCHRIFT

(11) **EP 0 860 315 B1**
(45) Veröffentlichungstag und Bekanntmachung des Hinweises auf die Patenterteilung: **19.12.2001**
(21) Anmeldenummer: 98102123.1
(22) Anmeldetag: 06.02.1998
(51) Int. Cl.: B60K 15/063

(54) **Gabelstapler**
Forklift truck
Chariot élévateur

(30) Priorität: 21.02.1997 DE 19707018
(43) Veröffentlichungstag der Anmeldung: 26.08.1998
(73) Patentinhaber: STILL GMBH, D-22113 Hamburg (DE)
(72) Erfinder: Kettenburg, Hans-Jörg, Dipl.-Ing., 22119 Hamburg (DE)
(74) Vertreter: Kasseckert, Rainer

(56) Entgegenhaltungen:
- US-A- 4 149 733
- PATENT ABSTRACTS OF JAPAN vol. 013, no. 514 (M-894), 17. November 1989 & JP 01 208227 A (NIPPON STEEL CORP;OTHERS: 01), 22. August 1989
- PATENT ABSTRACTS OF JAPAN vol. 096, no. 009, 30. September 1996 & JP 08 118972 A (KUBOTA CORP), 14. Mai 1996
- PATENT ABSTRACTS OF JAPAN vol. 016, no. 149 (M-1234), 13. April 1992 & JP 04 005122 A (TOYOTA AUTOM LOOM WORKS LTD), 9. Januar 1992

## Beschreibung

Die Erfindung betrifft einen Gabelstapler mit einer Antriebseinheit, einer frontseitig angeordneten Hubvorrichtung und einem heckseitig angeordneten Gegengewicht, wobei ein Tank, insbesondere ein Kraftstofftank, zumindest teilweise innerhalb des Gegengewichts angeordnet ist und wobei das Gegengewicht und der Tank von getrennten Bauteilen gebildet sind.

Gabelstapler der genannten Art weisen in der Regel eine im mittleren Bereich des Gabelstaplers angeordnete Antriebseinheit mit einem Verbrennungsmotor auf. Heckseitig der Antriebseinheit befindet sich das Gegengewicht des Gabelstaplers, welches die Massenkräfte einer auf der Hubvorrichtung befindlichen Last kompensiert. Die Antriebseinheit beinhaltet eine Kühleranordnung für den Verbrennungsmotor, wobei ein Kühlluftstrom der Kühleranordnung das Gegengewicht durch geeignete Hohlräume und heckseitige Öffnungen durchströmt.

In der Regel weisen Gabelstapler einen Kraftstofftank und einen Hydrauliktank auf, welche gemäß der üblichen Anordnung stets im Bereich der Antriebseinheit angeordnet sind. Die Anordnung eines Tanks in der Umgebung der Antriebseinheit schränkt den für die Antriebseinheit verfügbaren Raum stark ein. Darüber hinaus führt die räumliche Nähe des Tanks zur Antriebseinheit zu einer unerwünschten Erwärmung des Tankinhalts.

Auch bei obiger bekannter Anordnung für einen Kraftstofftank gemäß dem Oberbegriff, bei welcher der Tank teilweise in einem Hohlraum des Heckgewichts angeordnet ist und sich aus dem Heckgewicht heraus in den Bereich der Antriebseinheit erstreckt, tritt aufgrund der räumlichen Nähe zu dem Verbrennungsmotor eine unerwünschte Erwärmung des Tankinhalts ein. Weiterhin verhindert der Tank ein direktes Abströmen der Kühlluft durch das Gegengewicht, so daß beispielsweise eine gekrümmte Leitung für die Kühlluft erforderlich wird. Hierdurch verschlechtert sich insbesondere der Wirkungsgrad eines Lüfters der Kühleranordung.

Der vorliegenden Erfindung liegt die Aufgabe zugrunde, einen Gabelstapler zur Verfügung zu stellen, bei dem für die Antriebseinheit ausreichend Bauraum zur Verfügung steht und bei dem gleichzeitig ein guter Wirkungsgrad der Kühleranordnung sichergestellt ist.

Diese Aufgabe wird erfindungsgemäß dadurch gelöst, daß der Tank zweiteilig oder mehrteilig ausgebildet ist, wobei mindestens zwei Tankteile zumindest teilweise innerhalb des Gegengewichts angeordnet sind und in Querrichtung des Gabelstaplers voneinander beabstandet sind.

Die Teilung des Tanks ermöglicht ein Anpassen der Form des Tanks an die inneren Konturen des Gegengewichts. Hierbei können die Tankteile auch in Hinterschneidungen im Inneren des Heckgewichts eingefügt werden. Wenn die Tankteile vollständig in dem Gegengewicht angeordnet sind, liegt eine räumliche Trennung des Tanks zur Antriebseinheit vor. Hierdurch wird einerseits die unerwünschte Erwärmung des Tankinhalts verhindert, zum anderen wird bei einer Undichtheit des Tanks die Gefahr einer Entzündung des dann austretenden Kraft- oder Betriebsstoffs vermindert.

Zweckmäßigerweise sind die Tankteile in ihrem unteren Bereich durch eine Ausgleichsleitung verbindbar. Durch die Ausgleichsleitung ist ein gleichmäßiger Füllstand in beiden Tankteilen sichergestellt.

Gleichermaßen zweckmäßig ist es hierbei, wenn die Tankteile in ihrem oberen Bereich durch eine Entlüftungsleitung verbindbar sind. Bei einem Befüllen oder Entleeren des Tanks können sich die in den Tankteilen befindlichen Luftvolumina über die Entlüftungsleitung ausgleichen.

Mit besonderem Vorteil ist ein Kühlluftkanal einer Kühleranordnung für die Antriebseinheit zwischen den beiden innerhalb des Gegengewichts angeordneten Tankteilen angeordnet. Die Kühlluft der Kühleranordnung kann ungehindert zwischen den Tankteilen hindurchströmen. Es besteht somit eine direkte, nicht gekrümmte Verbindung zwischen der Antriebseinheit und den heckseitigen Öffnungen des Heckgewichts. Der Wirkungsgrad der Kühleranordnung wird somit durch die Anordnung des Tanks in keiner Weise verschlechtert.

In einer besonders zweckmäßigen Ausgestaltung der Erfindung sind die beiden innerhalb des Gegengewichts angeordneten Tankteile zueinander symmetrisch oder identisch ausgebildet. Insbesondere bei identischer Ausführung können für die Herstellung der beiden aus Kunststoff oder Stahlblech ausgebildeten Tankteile die selben Werkzeuge verwendet werden.

Insbesondere vorteilhaft ist es, wenn die Tankteile vollständig innerhalb des Gegengewichts angeordnet sind. Der Tank befindet sich somit vollständig außerhalb des Motorraums, in dem das Antriebsaggregat angeordnet ist.

Weitere Vorteile und Einzelheiten der Erfindung werden anhand des in den schematischen Figuren dargestellten Ausführungsbeispiels näher erläutert. Dabei zeigt
- Figur 1: einen gattungsgemäßen Gabelstapler,
- Figur 2: eine erfindungsgemäße Tankanordnung in einem Heckgewicht.

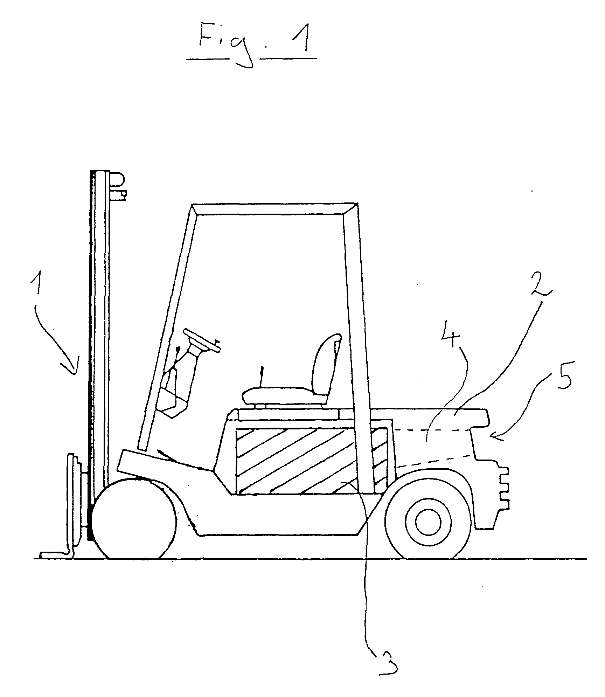

Figur 1 zeigt einen gattungsgemäßen Gabelstapler Außerhalb des Radstandes des Gabelstaplers befindet sich frontseitig eine Hubvorrichtung 1. Um die Stabilität des Gabelstaplers in jeder Betriebssituation zu gewährleisten, befindet sich am heckseitigen Ende des Gabelstaplers ein Gegengewicht 2. Vor dem Gegengewicht 2 ist eine schraffiert dargestellte Antriebseinheit 3 angeordnet, welche im vorliegenden Ausführungsbeispiel einen Verbrennungsmotor aufweist. Die Antriebseinheit 3 beinhaltet weiterhin einen Kühler, dessen Lüfter einen Luftstrom durch einen Hohlraum 4 und eine lastseitige Öffnung 5 des Gegengewichts 2 erzeugt.

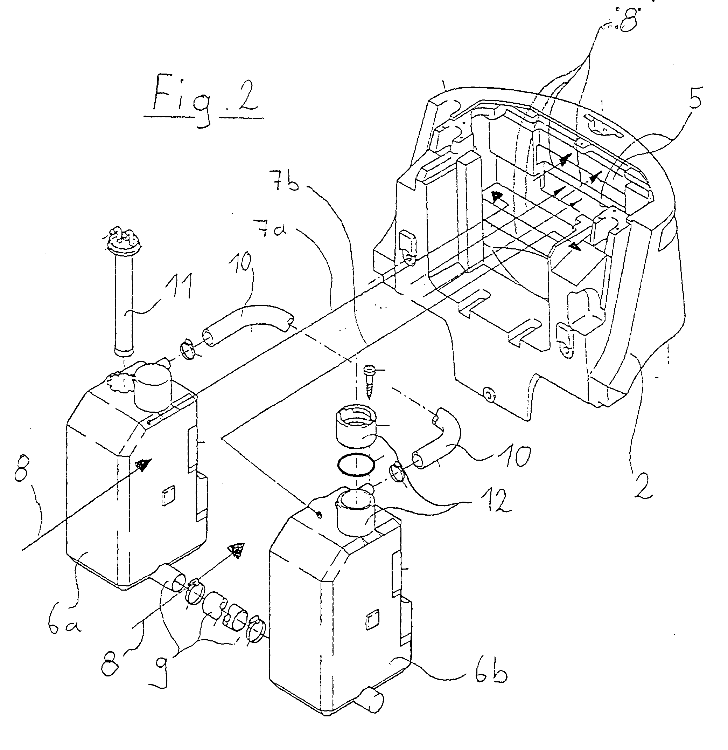

In Figur 2 ist in einer Explosionszeichnung eine erfindungsgemäße Anordnung eines Kraftstofftanks in einem Gegengewicht 2 dargestellt. Die beiden Tankteile 6a, 6b können entsprechend den Pfeilen 7a, 7b in die entsprechenden Ausnehmungen des Gegengewichts 2 eingefügt werden. Die beiden Tankteile 6a, 6b befinden sich hierbei vollständig innerhalb der äußeren Konturen des Gegengewichts 2. Im montierten Zustand sind die Tankteile 6a, 6b in seitlicher Richtung voneinander beabstandet. Der Zwischenraum zwischen den Tankteile 6a, 6b kann dabei entsprechend den Pfeilen 8 von einem Luftstrom aus einer Kühleranordnung durchströmt werden. Der Luftstrom tritt durch die heckseitigen Öffnungen 5 des Heckgewichts in die Umgebung aus.

In ihrem unteren Bereich sind die beiden Tankteile 6a, 6b durch eine Ausgleichsleitung 9 miteinander verbunden. Im oberen Bereich ist eine Entlüftungsleitung 10 zwischen den Tankteilen 6a, 6b vorgesehen. Durch diese Leitungen ist ein selbsttätiger Ausgleich des Füllstandes der Tankteile 6a, 6b jederzeit sichergestellt.

In das Tankteil 6a ist ein Saugrohr 11 eingesetzt, durch welches der Kraftstoff aus dem Tank entnommen werden kann. Das Tankteil 6b weist einen Einfüllstutzen 12 auf, durch den ein Betanken des Gabelstaplers erfolgt. Der Einfüllstutzen 12 ragt in eingebauter Stellung nach oben geringfügig über die äußere Kontur des Gegengewichts 2 hinaus.

Der seitliche Abstand der beiden Tankteile 6a, 6b in montiertem Zustand entspricht der Abbildung der Tankteile 6a, 6b in Fig. 2. Der Zwischenraum zwischen den Tankteilen 6a, 6b wird entsprechend den Pfeilen 8 von Luft aus einer Kühleranordnung durchströmt.

Bei der erfindungsgemäßen Anordnung ist der zur Verfügung stehende Raum innerhalb des Gegengewichts 2 durch den Tank bestmöglich ausgenutzt. Mit der Anordnung des Tanks in dem Gegengewicht wird zusätzlicher Platz für Aggregate in der Umgebung der Antriebseinheit geschaffen. Darüber hinaus entstehen durch die räumliche Trennung des Tanks von der Antriebseinheit erhebliche Verbesserungen hinsichtlich einer unerwünschten Erwärmung des Tankinhalts und einer Brandgefahr bei einer Undichtheit des Tanks.

## Patentansprüche

1. Gabelstapler mit einer Antriebseinheit (3), einer frontseitig angeordneten Hubvorrichtung (1) und einem heckseitig angeordneten Gegengewicht (2), wobei ein Tank, insbesondere ein Kraftstofftank, zumindest teilweise innerhalb des Gegengewichts (2) angeordnet ist und wobei das Gegengewicht (2) und der Tank von getrennten Bauteilen gebildet sind, **dadurch gekennzeichnet, daß** der Tank zweiteilig oder mehrteilig ausgebildet ist, wobei mindestens zwei Tankteile (6a, 6b) zumindest teilweise innerhalb des Gegengewichts (2) angeordnet sind und in Querrichtung des Gabelstaplers voneinander beabstandet sind.

2. Gabelstapler nach Anspruch 1, **dadurch gekennzeichnet, daß** die Tankteile (6a, 6b) in ihrem unteren Bereich durch eine Ausgleichsleitung (9) verbindbar sind.

3. Gabelstapler nach Anspruch 1 oder 2, **dadurch gekennzeichnet, daß** die Tankteile (6a, 6b) in ihrem oberen Bereich durch eine Entlüftungsleitung (10) verbindbar sind.

4. Gabelstapler nach einem der Ansprüche 1 bis 3, **dadurch gekennzeichnet, daß** ein Kühlluftkanal einer Kühleranordnung für die Antriebseinheit (3) zwischen den beiden innerhalb des Gegengewichts (2) angeordneten Tankteilen (6a, 6b) angeordnet ist.

5. Gabelstapler nach einem der Ansprüche 1 bis 4, **dadurch gekennzeichnet, daß** die beiden innerhalb des Gegengewichts (2) angeordneten Tankteile (6a, 6b) zueinander symmetrisch oder identisch ausgebildet sind.

6. Gabelstapler nach einem der Ansprüche 1 bis 5, **dadurch gekennzeichnet, daß** die Tankteile (6a, 6b) vollständig innerhalb des Gegengewichts (2) angeordnet sind.

## Claims

1. Fork-lift truck having a drive unit (3), a lifting apparatus (1), which is arranged at the front, and a counterweight (2) which is arranged at the rear, a tank, in particular a fuel tank, being arranged, at least in part, within the counterweight (2), and the counterweight (2) and the tank being formed by separate components, **characterized in that** the tank is designed in two or more parts, at least two tank parts (6a, 6b) being arranged, at least in part, within the counterweight (2) and being spaced apart from one another in the transverse direction of the fork-lift truck.

2. Fork-lift truck according to Claim 1, **characterized in that** the tank parts (6a, 6b) can be connected in their bottom region by an equalizing line (9).

3. Fork-lift truck according to Claim 1 or 2, **characterized in that** the tank parts (6a, 6b) can be connected in their top region by a venting line (10).

4. Fork-lift truck according to one of Claims 1 to 3, **characterized in that** a cooling-air duct of a cooler arrangement for the drive unit (3) is arranged between the two tank parts (6a, 6b) arranged within the counterweight (2).

5. Fork-lift truck according to one of Claims 1 to 4, **characterized in that** the two tank parts (6a, 6b) arranged within the counterweight (2) are designed to be symmetrical to one another or identical.

6. Fork-lift truck according to one of Claims 1 to 5, **characterized in that** the tank parts (6a, 6b) are arranged in their entirety within the counterweight (2).

## Revendications

1. Elévateur à fourche avec une unité d'entraînement (3), un dispositif de levage (1) disposé frontalement et un contrepoids (2) disposé à l'arrière, un réservoir, en particulier un réservoir de combustible, étant disposé au moins en partie à l'intérieur du contrepoids (2), le contrepoids (2) et le réservoir étant formés de composants distincts, **caractérisé en ce que** le réservoir est réalisé en deux parties ou en plusieurs parties, au moins deux parties de réservoir (6a, 6b) étant disposées au moins en partie à l'intérieur du contrepoids (2) et étant situées à distance l'une de l'autre dans la direction transversale de l'élévateur à fourche.

2. Elévateur à fourche selon la revendication 1, **caractérisé en ce que** les parties de réservoir (6a, 6b) peuvent être reliées par un conduit d'équilibrage (9) dans leur partie inférieure.

3. Elévateur à fourche selon la revendication 1 ou 2, **caractérisé en ce que** les parties de réservoir (6a, 6b) peuvent être reliées par un conduit d'évent (10) dans leur partie supérieure.

4. Elévateur à fourche selon l'une dès revendications 1 à 3, **caractérisé en ce qu'**un canal d'air de refroidissement d'un agencement de refroidisseur de l'unité d'entraînement (3) est disposé entre les deux parties de réservoir (6a, 6b) disposées à l'intérieur du contrepoids (2).

5. Elévateur à fourche selon l'une des revendications 1 à 4, **caractérisé en ce que** les deux parties de réservoir (6a, 6b) disposées à l'intérieur du contrepoids (2) ont une configuration symétrique l'une de l'autre ou la même configuration.

6. Elévateur à fourche selon l'une des revendications 1 à 5, **caractérisé en ce que** les parties de réservoir (6a, 6b) sont entièrement disposées à l'intérieur du contrepoids (2).
